# EUROPEAN PATENT APPLICATION

(11) **EP 4 119 698 A1**
(43) Date of publication of application: **18.01.2023**
(21) Application number: 20765351.0
(22) Date of filing: 03.08.2020
(51) Int. Cl.: C25B 1/04, C25B 9/23, C25B 9/70, C25B 9/19

(54) **DIRECT COUPLING DEVICE FOR GENERATING HYDROGEN FROM CONCENTRATED SUNLIGHT**

(30) Priority: 10.03.2020 PT 2020116152
(71) Applicant: Fusion Fuel Portugal, S.A., 2715-376 Almargem do Bispo (PT)
(72) Inventor: FERREIRA SILVA, Jaime Domingos, 1495-161 Lisboa (PT)
(74) Representative: Carvalho Franco, Isabel
(86) International application number: PCT/IB2020/057331
(87) International publication number: WO 2021/181149

(57) **Abstract**

This invention is a direct coupling device (31) to generate hydrogen from concentrated sunlight comprised of a solar concentrator (32) and a water electrolyser (33) where the solar concentrator (32) is comprised of an optical concentration element (15), adjacent to a number of photovoltaic cells (14) coupled to a heat exchanger (13) and the water electrolyser (33) comprised of a proton exchange membrane (2) in which the membrane is comprised of a number of individualized anode zones (6) and cathodic zones (12) coated with a catalyst, a number of cathode single-polar plates (3) and a number of anode single-polar plates (5), a number of regeneration electrodes (1), a number of floating flow guide plates (7), a number of elastic compression elements (8) and a casing consisting of an upper (9) and a lower (10) part.

## Description

The invention is a device to collect and concentrate sunlight, convert concentrated sunlight into electrical and thermal energy and use this energy to power a single proton membrane water electrolyser with several individualized anodic and cathodic catalyst coated zones, with direct coupling to generate hydrogen gas with better performance and service life.

### State of the art

The Chinese patent application CN 105483745 concerns a concentrated solar energy module and an electrolysis hydrogen production module, however, the application we intend to protect differs substantially from the Chinese patent application in that it is a single direct coupling device, which produces hydrogen from sunlight and water and only uses liquid water avoiding the use of water vapour.

### Detailed description of the invention

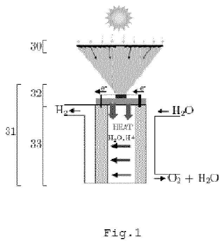

Figure 1 illustrates the operating concept of the device, showing that sunlight is collected and concentrated at a factor of 200 x or more using a Fresnel lens 30, for the direct coupling device 31, comprised of a solar concentrator 32 and a water electrolyser 33.

The sunlight is further concentrated at a factor of 1 x or more using the Solar Concentrator 32, which converts the concentrated sunlight into electrical and thermal energy, and which also transfers the energy to the water electrolyser 33, where thermal energy raises the temperature of the water circulating through the water electrolyser 33 and where electrical energy feeds the electrochemical electrolysis of the water, resulting in the generation of hydrogen and oxygen.

The direct coupling device 31 comprises a proton exchange membrane 2, such as Nafion^{®} or another ionomer, copolymer or polymer mixture, with several anodic individualized zones (6) coated with catalyst on one side of the membrane suitable to facilitate the oxidation of water, and several cathodic individualized zones (12) coated with catalyst on the opposite side suitable to facilitate/allow the reduction of protons to hydrogen gas, several cathode single-polar plates (UPP) 3 and several anode UPPs 5, each with a pair of cathode and anode UPPs enclosing the proton exchange membrane 2 and adjacent to the individualized areas coated with catalyst 12 and 6 on the cathode side and the anode side respectively.

The direct coupling device 31 also comprises several regeneration electrodes 1, enclosing the proton exchange membrane 2 and arranged towards the edge of the individualized zones coated with catalyst 6 and 12, so that they are adjacent to the coated zones on both sides of the proton exchange membrane 2, several floating flow guide plates 7 on both sides, enclosing the UPPs 5 and 3 and the proton exchange membrane 2 between them, several elastic compression elements 8 on both sides, enclosing the flow guide plates 7, the UPPs 5 and 3 and the proton exchange membrane 2 between them.

The device also has a casing consisting of an upper part 9 and a lower part 10, sealed together and enclosing the elastic compression elements 8, the floating flow guide plates 7, the UPPs 5 and 3, the regeneration electrodes 1 and the proton exchange membrane 2 between them, a source of electrical and thermal energy and the concentrator converter 32 connected to the top 9 of the casing.

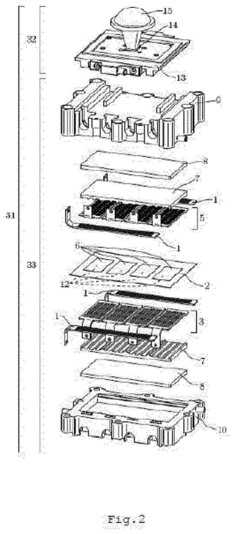

As illustrated in Figure 2, the concentrator converter 32 has an optical concentration element 15 glued to a photovoltaic cell 14 coupled with a heat exchanger 13. The optical concentration element 15 is made of glass with suitable optical composition, such as borosilicate glass which, by refraction and/or total internal reflection, redirects and further concentrates the sunlight falling on its upper surface in a multiple junction type photovoltaic cell 14, such as a triple-junction structure of GalnP / GaInAs / Ge or similar high-efficiency solar cell. The solar energy that is not directly converted into electrical energy by photovoltaic cell 14 is absorbed as thermal energy by the heat exchanger 13, made of an aluminium, copper or copper alloy, and which has several closed channels where water can circulate and be heated by the thermal energy.

The casing, which consists of an upper part 9 and a lower part 10, provides mechanical support for the other parts of the water electrolyser 33. The casing is typically made of a thermoplastic or thermoset polymer, with or without reinforcing additives or other similar material with appropriate electrical insulation properties and chemical and mechanical resistance.

The elastic compression element 8 can be made of, among other materials, a polymer material, a metal, an elastomer foam, or other materials with a suitable elasticity module, typically in the shape of a solid rectangular block, but which may also be hollow and may also include round or rectangular holes.

The floating flow guide plates 7 are typically made of a polymer, or polymer mixture, or any other suitable rigid material that is not electrically conductive, including metal alloys coated with electrically insulating layers. There are several open channels on their main surface facing the anode 5 or cathode 3 UPPs respectively. When assembled, and by the action of the elastic compression elements 8, the floating flow guide plates 7 press against the main cooperating surfaces of the single-polar plates 5 and 3 to allow the inlet of water and outlet of water and oxygen, and the outlet water and hydrogen respectively. The elastic compression elements 8 also provide the necessary contact force to allow close contact between the UPPs 5 and 3 and their individualized zones coated with catalyst 6 and 12 so that the electrical contact resistance between them can be kept to a minimum, thus lowering the operating voltage of the electrolysis reaction.

Anode 5 UPPs are typically made of titanium or a titanium alloy, with several round or rectangular holes, arranged on their main surface, serving as a combination of a gas diffusion layer and a current collector. Anode 5 UPPs are typically coated with a thin film of platinum or a platinum alloy.

Cathode 3 UPPs are typically made of a stainless-steel alloy with several round or rectangular holes, arranged on their main surface, serving as a combination of a gas diffusion layer and a current collector, usually with a thin coating of gold.

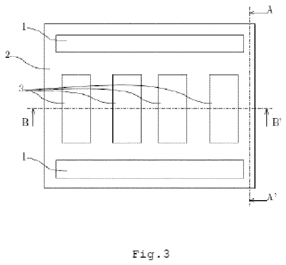

Regarding figure 3, it can be seen that the cathode UPPs 3 are arranged side by side against the proton exchange membrane 2, with some space separating them from each other and the regeneration electrodes 1, so that they are all physically separated from each other.

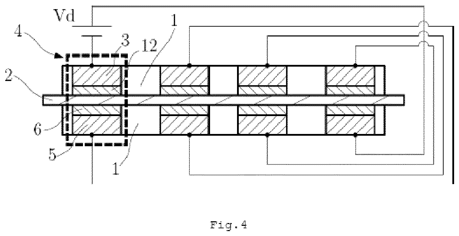

Figure 4 illustrates the electrical circuitry that conducts the electrolysis reaction. A cathode UPP (3) in contact with an individualized zone coated with a catalyst (12) of the proton exchange membrane 2 and facing an anode UPP 5 in contact with an individualized zone coated with catalyst 6 constitutes an electrochemical cell (4), the cathode UPP 3 is negatively polarized and the anode UPP 5 is positively polarized. Each electrochemical cell (4) is connected in series to the next, as illustrated in the circuit diagram, and all share the same proton exchange membrane 2.

The Vd voltage needed to ensure the electrolysis of the water is provided by the concentrator converter 32, illustrated in Figure 2.

The direct coupling device 31 should use very pure water free of ionic contaminants. The quality of deionized water is generally measured by its resistivity, which should be as high as possible (up to > 18 MQ cm) to avoid contaminating the proton exchange membrane with unwanted cations during operation and that accumulate over time impairing the electrolyser's performance and lifespan. However, in practice, and for economic reasons, it is desirable to use less pure water with resistivity > 4 MQ cm. To allow the use of less pure water, it is necessary to greatly reduce the accumulation of ionic contaminants in the proton exchange membrane and therefore the water electrolyser 33, as illustrated in figure 2, has several regeneration electrodes 1, enclosing the proton exchange membrane 2.

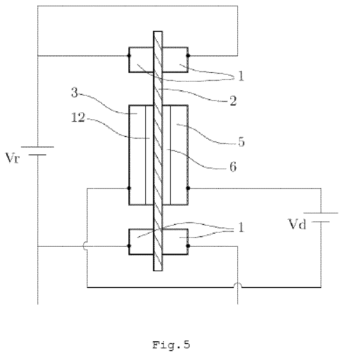

Concerning Figure 5, when the device is not in operation, for example at night or if it is overcast, the control voltage for electrolysis is ***Vd*** = ***0V**.* Under these conditions, an external circuit connected to regeneration electrodes 1 provides a Vr voltage of about 2 to 25 V, thereby establishing an electrical field that causes the cations accumulated on the proton exchange membrane 2 to move towards the enclosed zone between the negatively charged regeneration electrodes and out of the enclosed zones between the UPPs, thereby removing contamination in the active zones of the electrolyser and significantly extending the life of the proton exchange membrane 2.

This invention also has a method for generating hydrogen by the direct coupling device 31 with the following steps:
- establish the water supply circuit for electrolysis, where the flow enters the heat exchanger 13, exiting towards the water inlet from the top of the casing 9, through which it enters, to be distributed on the floating flow guide plates 7 to bathe the anode UPPs 5, the regeneration electrodes 1, the catalyst coated areas 6 and the proton exchange membrane 2;
- establish the hydrogen and water sampling circuit, in which a flow of hydrogen and water is led out of the cavity at the bottom of the liner 10 towards a suitable container;
- point the direct coupling device 31 towards the sun to capture the electrical and thermal energy needed to sustain the electrolysis of the water;
- close the electrical circuit to polarize the UPP 3 and 5 with the operating voltage Vd supplied by the photovoltaic cell 14, initiating the electrolysis of the water, which was heated during its passage through the heat exchanger 13;
- keep the assembly pointed at the sun as mentioned in step (3) for as long as the hydrogen generation is desired;

When no more hydrogen is required, stop the production by no longer pointing the assembly at the sun as referred to in step (3) and opening the electric circuit referred to in step (4).

Carry out the regeneration of the active zones of the proton exchange membrane 2 by closing the external circuit connecting the source of a voltage Vr to the regeneration electrodes 1 periodically at appropriate intervals and for an appropriate time when the production of hydrogen is interrupted (or it is not possible to produce directly from solar energy, especially at night or when it is overcast).

### Figure key

- 1-: Regeneration electrodes
- 2-: Proton exchange membrane
- 3-: Single-polar cathode plate (UPP)
- 4-: Electrochemical cell
- 5-: Single-polar anode plate (UPP)
- 6-: Individualized anodic zone coated with a catalyst
- 7-: Floating flow guide plate
- 8-: Elastic compression element
- 9-: Upper part of the casing
- 10-: Lower part of the casing
- 12-: Individualized cathodic area coated with a catalyst
- 13-: Heat exchanger
- 14-: Photovoltaic cell
- 15-: Optical concentration element
- 31 -: Direct coupling device
- 32 -: concentrator converter
- 33 -: water electrolyser

## Claims

1. Direct coupling device (31) to generate hydrogen from concentrated sunlight comprised of a solar concentrator (32) and a water electrolyser (33) with the solar concentrator (32) comprised of an optical concentration element (15), adjacent to several photovoltaic cells (14) coupled to a heat exchanger (13) and the water electrolyser (33) comprised of a proton exchange membrane (2) in which the membrane has several individualized anode zones (6) and cathodic zones (12) coated with a catalyst, several cathode single-polar plates (3) and several anode single-polar plates (5) arranged adjacent to the catalyst coated areas (12) and (6), several regeneration electrodes (1), several floating flow guide plates (7), several elastic compression elements (8) and a casing consisting of an upper (9) and a lower (10) part.

2. Direct coupling device (31) to generate hydrogen from concentrated sunlight according to claim 1, **characterized by** a single-polar cathode plate (3) in contact with a catalyst coated zone (12) of the proton exchange membrane (2), directed to a single-polar anode plate (5) in contact with a catalyst coated zone (6), make up an electrochemical cell (4)

3. Direct coupling device (31) to generate hydrogen from concentrated sunlight according to the above claims, **characterized by** each electrochemical cell (4) being electrically connected in series with the next cell and each cell sharing the same proton membrane (2), enabling the electrolysis.

4. Direct coupling device (31) to generate hydrogen from concentrated sunlight according to the above claims, **characterized by** the necessary voltage Vd to ensure the electrolysis being supplied by the concentrator converter (32).

5. Direct coupling device (31) to generate hydrogen from concentrated sunlight according to claim 1, **characterized by** the single-polar anode (5) and cathode (3) plates with several holes, arranged on the main surface and capable of combining a gas diffusion layer and a current collector.

6. Direct coupling device (31) to generate hydrogen from concentrated sunlight according to claim 1, **characterized by** the single-polar floating flow guide plates (7) being compressed by the action of the elastic compression elements (8) against the single-polar plates (5) and (3), providing the inlet of water and outlet of water and oxygen, and the output of water and hydrogen.

7. Direct coupling device (31) to generate hydrogen from concentrated sunlight according to claim 1, **characterized by** the regeneration electrodes (1), under non-operating conditions of the device, to ensure the removal of contamination in the active zones of the electrolyser by displacing cations accumulated in the proton exchange membrane (2).

8. Method of hydrogen generation with the direct coupling device claimed in claim 1, **characterised by** the following steps:
- establish the water supply circuit for electrolysis, where the flow enters the heat exchanger (13), exiting towards the water inlet at the top of the casing (9) where it is distributed by the floating flow guide plates (7) to bathe the anode UPPs (5), the regeneration electrodes (1), the catalyst coated zones (6) and the proton exchange membrane (2);
- establish the hydrogen and water collection circuit, in which a flow of hydrogen and water is led out of the cavity at the bottom of the casing (10) towards a suitable container;
- point the direct coupling device (31) towards the sun to capture the electrical and thermal energy necessary to sustain the electrolysis of the water;
- close the electrical circuit, to polarize the UPPs 3 and 5 with the operating voltage Vd supplied by the photovoltaic cell (14) to start the electrolysis of the water, which has been heated during its passage through the heat exchanger (13);
- keep the assembly pointed at the sun as referred to in the third stage, as long as one wishes to maintain the hydrogen generation.
